(19) Europäisches Patentamt

European Patent Office

Office européen des brevets

(11) **EP 1 065 189 A1**

(12) **EUROPEAN PATENT APPLICATION**
published in accordance with Art. 158(3) EPC

(43) Date of publication:
03.01.2001 Bulletin 2001/01

(51) Int. Cl.[7]: **C04B 35/00**

(21) Application number: 99901183.6

(86) International application number:
PCT/JP99/00316

(22) Date of filing: 26.01.1999

(87) International publication number:
WO 99/37595 (29.07.1999 Gazette 1999/30)

(84) Designated Contracting States:
DE ES FR GB IT

(30) Priority: 26.01.1998 JP 1305498
26.01.1998 JP 1305598

(71) Applicant:
Nippon Steel Chemical Co., Ltd.
Tokyo 141-0031 (JP)

(72) Inventors:
• KAWANO, Youichi,
Res. & Dev. Lab. Nippon Steel Ch
Tobata-ku, Kitakyushu-shi, Fukuoka-ken 8 (JP)
• KAWARADA, Takayuki,
Res. Dev. Lab. Nipp. Steel Ch
Tobata-ku, Kitakyushu-shi, Fukuoka-ken 8 (JP)
• FUKUDA, Tessei,
Res. & Dev. Lab. Nippon Steel Che
Tobata-ku, Kitakyushu-shi, Fukuoka-ken 8 (JP)

(74) Representative:
Hall, Matthew Benjamin
Frank B. Dehn & Co.
179 Queen Victoria Street
London EC4V 4EL (GB)

(54) **PROCESS FOR THE PREPARATION OF NEEDLE COKE FOR GRAPHITE ELECTRODES**

(57) This invention relates to a process for preparing needle coke for graphite electrodes which comprises treating coal- tar or petroleum-based needle coke with a solution or suspension of iron oxide or a compound forming iron oxide by undergoing reaction or decomposition upon heating with coke until adhesion of 0.1 to 15% by weight of the iron compound to the needle coke before kneading with binder pitch and then heat treatming at 300 to 1,600°C or calcining at 1,200 to 1,600 °C. The process of this invention makes it possible to prepare needle coke with reduced puffing during the graphitization, increased yield during the graphitizing step and improved product properties such as strength regardless of whether the raw material coke is derived from coal or petroleum.

EP 1 065 189 A1

**Description**

Technical Field

This invention relates to a process for preparing needle coke useful as raw material for the manufacture of graphite electrodes.

Background Technology

Coke useful for artificial graphite electrodes, namely needle coke, is obtained by converting heavy oil such as coal tar-derived pitch and petroleum-derived pitch into green coke by delayed coking and calcining the green coke. Artificial graphite electrodes are manufactured by adjusting the particle size of needle coke to a given size distribution, kneading with binder pitch, forming by extrusion, baking, impregnating a impregnating pitch, baking secondarily, repeating the foregoing procedure several times if necessary, and graphitizing. The graphitization consists of a heat treatment at 2,500 to 3,000 °C and an LWG furnace (direct current-carrying type) is generally used in this step.

However, the temperature rises rapidly when graphitization is effected in this LWG furnace and, as a result, gases are generated at a higher rate and a phenomenon of abnormal volume expansion called puffing tends to occur readily.

Puffing reduces the density of electrodes and, in extreme cases, damages electrodes and studies have been carried on to develop puffing inhibitors and make needle coke with a low degree of puffing.

Puffing is considered to occur when sulfur is released at a temperature in the range of 1,700 to 2,000 °C where graphitization begins and compounds such as iron oxide ( Japanese patent JP55- 110190(A1)), nickel and related compounds (JP60- 190491(A1)), and titanium oxide (JP02-51409(A1)) have been disclosed as puffing inhibitors, that is, compounds capable of forming sulfides such as iron sulfide by temporarily trapping the released sulfur and decomposing at a higher temperature thereby shifting the timing of sulfur release to a higher temperature. It has been confirmed that the effect of iron oxide varies with the kind of raw material coke, excellent on petroleum-based coke but poor on coal tar-based coke.

JP02-92814(A1) discloses a process for uniformly dispersing an iron compound as inhibitor inside the pores of coke wherein coke is impregnated with a solution of solvent-soluble iron sulfate or iron nitrate in water, alcohol and the like or with a suspension of fine powders of iron oxide, drying the impregnated coke to drive off the water or the alcohol, mixing the dried coke with binder pitch, and graphitizing the mixture. When the impregnated coke is merely dried, however, the inhibitor impregnating the coke releases moisture or decomposes into gases to cause such problems as defective and low-stregnth electrodes.

On the other hand, JP53-35801(B1) discloses a process for preparing low-puffing needle coke by carrying out the first-stage calcination of green coke at a temperature lower than the one normally used, say in the range of 600 to 1,000 °C, cooling once, and then carrying out the second-stage calcination at a temperature in the range of 1,200 to 1,500 °C. However, carrying out the calcination in multiple steps runs into a problem of increased consumption of thermal energy and is economically questionable unless sufficient reduction of puffing is obtained.

In consequence, an object of this invention is to provide low-puffing needle coke useful for graphite electrodes which is capable of improving the yield and properties of graphite electrodes.

Another object of this invention is to provide a process for preparing needle coke useful for graphite electrodes which is capable of sufficiently controlling the puffing of not only petroleum-based needle coke but also coal tar-based coke without incurring heavy production cost.

The present inventors have conducted an intensive study to solve the problems involved in the aforementioned objects, found that the effect of controlling puffing can be increased markedly by using as a puffing inhibitor at least one kind of iron compound selected from iron oxide and compounds forming iron oxide either by reaction or decomposition upon heating, impregnating needle coke or calcined coke of intermediate stage with a solution or suspension of such puffing inhibitor, and heating at a temperature sufficiently higher than the normal drying temperature, and completed this invention.

Disclosure of the Invention

Accordingly, this invention relates to a process for preparing needle coke useful for graphite electrodes which comprises treating needle coke with a solution or suspension of at least one kind of iron compound selected from iron oxide and compounds forming iron oxide by either reaction or decomposition upon heat treatment with coke until adhesion of 0.1 to 15% by weight of the iron compound to the needle coke prior to kneading with binder pitch and submitting to heat treatment at a temperature in the range of 300 to 1,600 °C.

In addition, this invention is concerned with a process for preparing needle coke by calcining in two or more stages the green coke manufactured by delayed coking and relates to a process for preparing needle coke useful for graphite electrodes which comprises carrying out the fore-stage calcination of the green coke at a temperature in the range of 600 to 1,000 °C to calcined coke of intermediate stage, treating it with a solution or suspension of at least one kind of iron compound selected from iron oxide and compounds forming iron oxide by either reaction or decomposition upon heat treatment with coke until adhesion of 0.1 to 15% by weight of the iron compound, and carrying out the rear-stage calcination at a temperature in the range of 1,200 to 1,600 °C.

In this invention, compounds forming iron oxide are preferably at least one kind of iron compound selected from a group of iron sulfate, iron chloride, iron nitrate, iron carbonate, iron alum, iron carbonyl, iron acetate, iron citrate, and cyclopentadienyliron.

This invention will be described in detail below.

Coke to be used in this invention is needle coke or coke of intermediate stage obtained by calcining green coke manufactured by delayed coking of heavy oils composed of one or both of petroleum- and coal tar-derived pitches.

The calcining temperature is in the range of about 1,000 to 1,600°C, preferably about 1,200 to 1,500°C, in one-stage calcination while it is in the range of about 600 to 1,000 °C in the fore stage and in the range of about 1000 to 1,600 °C, preferably about 1,200 to 1,500 °C, in the rear stage in two-stage calcination. It is possible to carry out the calcination in three stages or more and, in such a case, the calcining temperature is raised successively one stage after another.

Where calcined needle coke is used, the calcination may be carried out in one stage or multiple stages without ill effect but it must be carried out before kneading with binder pitch.

Where calcined coke of intermediate stage is used, the calcination may be carried out either in two stages or in three stages or more without ill effect and it is preferable for the coke in question to have been calcined in the temperature range of about 600 to 1,000 °C in the fore stage. Here also, the calcination must be carried out before kneading with binder pitch.

The aforementioned needle coke or calcined coke of intermediate stage is impregnated with a solution or suspension of an iron compound while the temperature of coke is preferably kept below 100°C.

Iron compounds to be used in this invention are iron oxide or those compounds which react or decompose upon heating to form iron oxide and they are used dissolved or suspended in a solvent such as water, alcohol, acetone and hydrocarbon oil, preferably in water. When coke is impregnated with such iron compound in solution or suspension, the compound adheres not only to the surface of coke but also to the inside of pores of coke with the resultant enhanced effect as inhibitor. Therefore, where a solvent-insoluble iron compound such as iron oxide and iron hydroxide is used, it is advantageously applied as a suspension with such particle diameter as to allow intrusion into the pores of needle coke. Concretely, the average particle diameter is 100 $\mu$ m or less, preferably 10 $\mu$ m or less.

In order to ensure sufficient adhesion of iron compounds not only to the surface but also to the inside of pores, it is preferable to use a group of iron sulfate, iron chloride, iron nitrate, iron carbonate and iron alum which are readily soluble in water and another group of iron carbonyl, iron acetate, iron citrate and cyclopentadienyliron which are readily soluble in organic solvents such as alcohol and benzene and apply them as solutions in such solvents. A suspension of iron oxide in a solvent with the particle diameter sufficiently reduced to allow entrance into pores of coke is also desirable.

The amount of adhering iron compound is 0.1 to 15% by weight, preferably 0.5 to 10% by weight, based on coke. Any amount short of this range does not produce a sufficient effect for reducing puffing in practice while any amount in excess of this range produces no more noticeable effect and besides the ash content exerts an undesirable influence on the properties of finished electrodes. Here, the amount of adhering iron compound refers to the amount calculated as iron oxide.

Needle coke or calcined coke of intermediate stage is impregnated with a solution or suspension of iron compound, dried and then submitted to heat treatment or rear-stage calcination.

In the cases where calcined needle coke is impregnated, heat treatment is effected at a temperature in the range of 300 to 1,600°C, preferably 300 to 1,500 °C, more preferably 500 to 1,000 °C.

The conditions for this heat treatment such as temperature and length of time are preferably so chosen that iron compounds containing water of crystallization are freed of the water and iron compounds other than iron oxide are converted substantially wholly to iron oxide. In particular, where iron compounds undergo decomposition or reaction to yield iron oxide accompanied by generation of gases, the conditions are so chosen as to maximize the occurrence of such decomposition and reaction. The temperature of heat treatment is preferably set at 300°C or more as water of crystallization is difficult to come off below 300°C or, more preferably, at 500°C or more to allow iron compounds to react with oxygen present in the atmosphere or to cause iron compounds themselves to decompose. On the other hand, heat treatment at a temperature in excess of 1,600°C is not economical because the effect for controlling puffing reaches a saturation point and does not increase any more in response to a further input of heat energy. It is preferable to effect the heat treatment in a reducing atmosphere.

In the cases where calcined coke of intermediate stage is impregnated with a solution or suspension of iron compounds, the impregnated coke is dried and submitted to the rear-stage calcination. The rear-stage calcination is preferably carried out at a temperature higher than that for the fore-stage calcination and, in case the temperature for the latter is in the range of 600 to 1,000 °C, the temperature for the former is in the range of about 1,000 to 1,600 °C, preferably about 1,000 to 1,500 °C, more preferably about 1,200 to 1,500 °C. Here, the fore-stage calcination refers to the calcination carried out immediately before the impregnation while the rear-stage calcination refers to the calcination carried out after the impregnation.

The aforementioned heat treatment or the rear-stage calcination effected after the impregnation with iron compounds prevents the formation of defects in electrodes caused by moisture released from iron compounds or the decrease in bulk density of electrodes caused by gases resulting from the decomposition of iron compounds during calcination in the course of the manufacture of electrodes.

For the preparation of graphite electrodes from neede coke obtained in the aforementioned manner, the needle coke is pulverized, adjusted to a given particle size distribution, kneaded with binder pitch, formed by extrusion, baked, impregnated with pitch, baked secondarily, with repetition of this procedure several times as needed, and finally graphitized by heating at a temperature in the range of about 2,500 to 3,000 °C. Iron oxide is often added as puffing inhibitor during kneading with binder pitch, but this addition may be omitted in the procedure of this invention as iron oxide is already present in coke. Nevertheless, the addition of iron oxide here helps to produce a still more enhanced effect of reducing puffing.

Best Mode for Carrying out the Invention

This invention will be described with reference to examples below. Needle cokes obtained in the examples and comparative examples are measured for puffing and bulk density (BD) in accordance with the following methods.

《Method of measuring puffing 》

Coke is pulverized, sized (8 ～ 16 mesh, 40%; 48 ～ 200 mesh, 35%; 200 mesh and less; 25%), kneaded with 30% (the percentage to the gross amount) of binder pitch at 160°C for 20 minutes, and molded into a test piece measuring 20 mm $\phi \times$ 100 mm. The test piece is baking up to 900 °C in a baking furnace, impregnated with pitch, baked secondarily again at 900 °C and used as sample for the measurement of puffing. The sample is heated to 2,500 °C at a rate of 10°C/min and puffing is expressed in terms of the maximum degree of elongation observed from 1,500°C to 2,500 °C.

《Method of measuring bulk density after graphitization 》

The volume of the test piece is calculated from its diameter and length and also the test piece is weighed. The bulk density is calculated by dividing the weight with the volume.

Example 1

Green coke manufactured from coal tar-derived heavy oil by delayed coking was calcined to give coal tar-based needle coke.

The needle coke (3 kg) was impregnated with an 8wt% aqueous solution of iron sulfate until adhesion of 750 g of the solution, left standing for 30 minutes, dried at 150°C, and then heat-treated at 900 °C to give needle coke for graphite electrodes.

Example 2

The needle coke (3 kg) of Example 1 was impregnated with a 12wt% aqueous solution of iron nitrate until adhesion of 750 g of the solution, left standing for 30 minutes, dried at 150 °C, and then heat-treated at 900 °C to give needle coke for graphite electrodes.

Example 3

The needle coke (3 kg) of Example 1 was impregnated with a 13wt% aqueous solution of iron alum until adhesion of 750 g of the solution, left standing for 30 minutes, dried at 150°C, and then heat-treated at 900 °C to give needle coke for graphite electrodes.

Example 4

The needle coke (3 kg) of Example 1 was impregnated with an 8wt% aqueous solution of iron acetate until adhesion of 750 g of the solution, left standing for 30 minutes, dried at 150 °C, and then heat-treated at 900 °C to give needle coke for graphite electrodes.

Comparative Example 1

The needle coke (3 kg) of Example 1 was impregnated with an 8wt% aqueous solution of iron sulfate until adhesion of 750 g of the solution, left standing for 30 minutes and dried at 150°C to give needle coke for graphite electrodes. The heat treatment was not carried out.

Example 5

The needle coke (3 kg) of Example 1 was impregnated with an 8wt% aqueous solution of iron sulfate until adhesion of 750 g of the solution, left standing for 30 minutes, dried at 150 °C, and then submitted to heat treatment at 900 °C to give needle coke for graphite electrodes.
The coke for graphite electrodes thus obtained was kneaded with binder pitch while adding 1 part by weight of iron oxide to 100 parts by weight of the coke and the test piece and sample were prepared as in Example 1 for measurement of puffing and bulk density after graphitization.

Example 6

Green coke manufactured from petroleum-derived heavy oil by delayed coking was calcined to give petroleum-derived needle coke.
The needle coke was impregnated with an 8wt% aqueous solution of iron sulfate until adhesion of 750 g of the solution, left standing for 30 minutes, dried at 150°C, and then heat-treated at 900 °C to give needle coke for graphite electrodes.

Comparative Example 2

The needle coke used in Example 1 which had been obtained by calcining the green coke was measured for puffing and bulk density after graphitization.

Comparative Example 3

The test piece and sample were prepared as in Comparative Example 2 except adding 1 part by weight of iron oxide to 100 parts by weight of the coke and measured for puffing and bulk density after graphitization.

Comparative Example 4

The petroleum-derived needle coke of Example 6 which had been obtained by calcining the green coke was measured for puffing and bulk density after graphitization.
The test conditions and the results of measurements of Examples 1 to 6 are shown in Table 1 and those of Comparative Examples 2 to 4 in Table 2.
The amount of adhering iron compound is calculated by the following equation:

$$\text{Amount of adhering iron compound (wt\%)} = (C - A)/B \times 100$$

wherein A is the mass of ash when the needle coke before impregnation with the iron compound is incinerated at 800 °C, B is the mass of the needle coke after impregnation with the iron compound and heat treatment (or drying where heat treatment is omitted), and C is the mass of ash when the needle coke of mass B is incinerated at 800 °C.

Table 1

| | Example | Example | Example | Example | Compara-tive exam-ple | Example | Example |
|---|---|---|---|---|---|---|---|
| | 1 | 2 | 3 | 4 | 1 | 5 | 6 |
| Needle coke | Coal tar based | Coal tar based | Coal tar based | Coal tar based | Coal tar based | Coal tar based | Petroleum based |
| Iron compound | Iron sulfate | Iron nitrate | Ammonium iron sulfate | Iron acetate | Iron sulfate | Iron sulfate | Iron sulfate |
| Heat treatment temperature(°C) | 900 | 900 | 900 | 900 | - | 900 | 900 |
| Amount of adhering iron compound(wt%) | 1.0 | 1.0 | 0.9 | 0.9 | 1.0 | 1.0 | 0.9 |
| Addition of iron compound during kneading | None | None | None | None | None | 1 part by weight | None |
| Puffing | 1.08 | 0.97 | 1.07 | 1.05 | 1.13 | 0.90 | 0.8 |
| Graphitized bulk density | 1.58 | 1.59 | 1.56 | 1.57 | 1.54 | 1.61 | 1.60 |

Table 2

| | Comparative example | Comparative example | Comparative example |
|---|---|---|---|
| | 2 | 3 | 4 |
| Needle coke | Coal tar based | Coal tar based | Petroleum based |
| Iron compound | - | - | - |
| Heat treatment temperature(°C) | - | - | - |
| Ash content (wt%) | 0.08 | 0.08 | 0.10 |
| Addition of iron compound during kneading | None | 1 part by weight | None |
| Puffing | 1.91 | 1.48 | 1.18 |
| Graphitized bulk density | 1.53 | 1.56 | 1.58 |

Example 7

Green coke prepared by delayed coking of coal-derived heavy oil was calcined at 800°C to give calcined coke of intermediate stage which was used in this example. To 3 kg of this calcined coke was added 750 g of an 8wt% aqueous solution of iron sulfate, the mixture was left standing for 30 minutes, dried at 150 °C, and then calcined at 1,400°C to give coke for graphite electrodes.

Example 8

The calcined coke (3 kg) of Example 7 was impregnated with a 12wt% aqueous solution of iron nitrate until adhesion of 750 g of the solution, left standing for 30 minutes, dried at 150°C, and then calcined at 1,400°C to give coke for graphite electrodes.

Example 9

The calcined coke (3 kg) of Example 7 was impregnated with a 13wt% aqueous solution of iron alum until adhesion of 750 g of the solution, left standing for 30 minutes, dried at 150°C, and then calcined at 1,400°C to give coke for graphite electrodes.

Example 10

The calcined coke (3 kg) of Example 7 was impregnated with an 8wt% aqueous solution of iron acetate until adhesion of 750 g of the solution, left standing for 30 minutes, dried at 150°C, and then calcined. at 1,400°C to give coke for graphite electrodes.

Example 11

The calcined coke of Example 7 was impregnated with an 8wt% aqueous solution of iron sulfate until adhesion of 750 g of the solution, left standing for 30 minutes, dried at 150°C, and then calcined at 1,400 °C to give coke for graphite electrodes.
The test piece and sample were prepared as in Example 7 from the coke for graphite electrodes thus obtained except adding 1 part by weight of iron oxide to 100 parts by weight of the coke during kneading with binder pitch and measured for puffing and bulk density after graphitization.

Comparative Example 5

The calcined coke of Example 7 was further calcined at 1,400 °C without impregnation with iron compound to give needle coke for graphite electrodes.

Comparative Example 6

The test piece and sample were prepared as in Comparative Example 5 from the coke for graphite electrodes obtained in Comparative Example 5 except adding 1 part by weight of iron oxide to 100 parts by weight of the coke during kneading with binder pitch and measured for puffing and bulk density after graphitization.
The test conditions and the results of measurement of Examples 7 to 11 and Comparative Examples 5 and 6 are shown in Table 3.

Table 3

| | Example | Example | Example | Example | Example | Comparative example | Comparative example |
|---|---|---|---|---|---|---|---|
| | 7 | 8 | 9 | 10 | 11 | 5 | 6 |
| Iron compound | Iron sulfate | Iron nitrate | Ammonium iron sulfate | Iron acetate | Iron sulfate | - | - |
| Amount of adhering iron compound(wt%) | 0.9 | 0.9 | 0.8 | 1.1 | 1.0 | - | - |

Table 3 (continued)

| | Example | Example | Example | Example | Example | Compara-tive exam-ple | Compara-tive exam-ple |
|---|---|---|---|---|---|---|---|
| | 7 | 8 | 9 | 10 | 11 | 5 | 6 |
| Addition of iron com-pound dur-ing kneading | None | None | None | None | 1 part by weight | None | 1 part by weight |
| Puffing | 1.07 | 0.87 | 0.97 | 1.15 | 0.77 | 1.80 | 1.41 |
| Graphitized bulk density | 1.60 | 1.61 | 1.57 | 1.57 | 1.61 | 1.55 | 1.58 |

Industrial Applicability

Needle coke for graphite electrodes obtained by the process of this invention effectively controls puffing in the graphitization step and raises the yield of electrodes and still more improves the product properties such as strength in the manufacture of electrodes. Also, the process of this invention is highly useful as it is applicable not only to petroleum-based needle coke but also to coal-based needle coke.

**Claims**

1. A process for preparing needle coke for graphite electrodes which comprises treating needle coke with at least one kind of iron compound selected from iron oxide and compounds forming iron oxide by undergoing reaction or decomposition upon heating with coke in the state of a solution or suspension until adhesion of 0.1 to 15% by weight of the iron compound to the needle coke before kneading with binder pitch and then heattreating at a temperature in the range of 300 to 1,600 °C.

2. In a process for preparing needle coke by calcining in two or more stages the green coke manufactured by delayed coking, a process for preparing needle coke for graphite electrodes which comprises calcining the green coke at a temperature in the range of 600 to 1,000 °C in the fore stage to give calcined coke of intermediate stage, treating said calcined coke with at least one kind of iron compound selected from iron oxide and compounds forming iron oxide by undergoing reaction or decomposition upon heating with coke in the state of a solution or suspension until adhesion of 0.1 to 15% by weight of the iron compound to said calcined coke before kneading with binder pitch and then calcining at a temperature in the range of 1,200 to 1,600 °C in the rear stage.

3. A process for preparing needle coke for graphite electrodes as described in claim 1 or 2 wherein said compounds forming iron oxide are at least one kind of iron compound selected from a group of iron sulfate, iron chloride, iron nitrate, iron carbonate, iron alum, iron carbonyl, iron acetate, iron citrate and cyclopentadienyliron.

**REVISED VERSION**

## INTERNATIONAL SEARCH REPORT

International application No.

PCT/JP99/00316

| A. CLASSIFICATION OF SUBJECT MATTER |
|---|
| Int.Cl⁶ C04B35/52, C01B31/00 |

According to International Patent Classification (IPC) or to both national classification and IPC

| B. FIELDS SEARCHED |
|---|

Minimum documentation searched (classification system followed by classification symbols)

Int.Cl⁶ C04B35/52, C01B31/00-31/36

Documentation searched other than minimum documentation to the extent that such documents are included in the fields searched

| Jitsuyo Shinan Koho | 1926-1996 | Toroku Jitsuyo Shinan Koho | 1994-1999 |
|---|---|---|---|
| Kokai Jitsuyo Shinan Koho | 1971-1999 | Jitsuyo Shinan Toroku Koho | 1996-1999 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP, 63-288964, A (Toyo Carbon Co., Ltd.), 25 November, 1988 (25. 11. 88) (Family: none) | 1-3 |
| A | JP, 2-92814, A (Showa Denko K.K.), 3 April, 1990 (03. 04. 90) (Family: none) | 1-3 |
| A | JP, 53-35801, B2 (Koa Oil Co., Ltd.), 29 September, 1978 (29. 09. 78) & US, 4100265, A | 1-3 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 5 February, 1999 (05. 02. 99) | 16 February, 1999 (16. 02. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)